# EUROPÄISCHE PATENTSCHRIFT

(11) **EP 0 744 676 B1**
(45) Veröffentlichungstag und Bekanntmachung des Hinweises auf die Patenterteilung: **23.08.2000**
(21) Anmeldenummer: 96107436.6
(22) Anmeldetag: 10.05.1996
(51) Int. Cl.: G05B 19/042

(54) **Verfahren und Einrichtung zum sicheren Betrieb einer numerischen Steuerung auf Werkzeugmaschinen oder Robotern**
Method and device for safe operation of a numerical control on a machine-tool or a robot
Méthode et dispositif de sûreté de fonctionnement d'une commande numérique pour une machine-outil ou un robot

(30) Priorität: 11.05.1995 DE 19517377
(43) Veröffentlichungstag der Anmeldung: 27.11.1996
(73) Patentinhaber: SIEMENS AKTIENGESELLSCHAFT, 80333 München (DE)
(72) Erfinder: Schmittele, Max, Dipl.-Ing.,, 91058 Erlangen (DE); Schleicher, Siegfried, Dr.-Ing.,, 09113 Chemnitz (DE); Brune, Richard, Dipl.-Ing.,, 90765 Fürth (DE); Hertinger, Klaus, Ing.(FH), 91056 Erlangen (DE); Hauf, Ronald, Dipl.-Ing.,, 91096 Möhrendorf (DE)

(56) Entgegenhaltungen:
- EP-A- 0 057 453
- EP-A- 0 109 602
- EP-A- 0 352 759
- WO-A-89/10865
- DE-A- 3 633 953
- FR-A- 2 561 410

## Beschreibung

Die Erfindung bezieht sich auf eine Einrichtung und ein Verfahren zum sicheren Betrieb einer numerischen Steuerung für Werkzeugmaschinen oder Roboter mit zwei taktgesteuerten Prozessoren, durch die aus gleichen Eingangssignalen entsprechend vorgebbarer Umsetzbedingungen gleiche Ausgangssignale generierbar sind, bzw. generiert werden.

Aus der EP 0 658 832 ist es bekannt, bei einer Werkzeugmaschine oder einen Roboter einen sicheren Betrieb auch ohne den Einsatz von Endlagenschaltern zu ermöglichen, indem eine durchgängige zweikanalige sichere Wegerfassung erfolgt, die zwei Prozessoren aus dem eigentlichen Numerikteil und der Antriebsregelung verwendet.

Bei solchen Systemen muß im Interesse einer höchsten Sicherheit allerdings auch das Betriebsverhalten der Prozessoren überwacht werden.

Aufgabe der Erfindung ist es, eine Einrichtung und ein Verfahren der eingangs genannten Art so auszubilden, daß bei Störungen der Prozessoren mit Sicherheit Stopreaktionen ausgelöst werden.

Ausgangspunkt der Erfindung ist dabei der Einsatz eines kreuzweisen Datenvergleiches in beiden CPUs. So gilt:
CPU1: wert_x(CPU1)-wert_x(CPU2)> = toleranz_x
CPU2: wert_x(CPU2)-wert_x(CPU1)> = toleranz_x

Dies heißt, daß bei gleichen Eingangssignalen von beiden CPUs auch bis auf vorgegebene Toleranzwerte gleiche Ausgangssignale generiert werden müssen. Unter wert_x wird übrigens das Ausgangssignal der jeweiligen CPU verstanden, unter toleranz_x ist der Toleranzwert für die Ausgangssignaldifferenz zu verstehen.

Beim kreuzweisen Vergleich werden nicht nur konstante, sondern auch variable Wert miteinander verglichen. Diese werden in jedem Takt neu berechnet. Da die Vergleichswerte in beiden CPUs aber stets vom gleichen Takt stammen und desweiteren bei der Übertragung der Werte von CPU1 nach CPU2 und umgekehrt auch noch eine Verzögerung von einem Takt entsteht, müssen besondere Maßnahmen getroffen werden, wie ein sicherer Vergleich erfolgt.

In diesem Zusammenhang wird die oben genannte Aufgabe für die gattungsgemäße Einrichtung dadurch gelöst, daß jeweils zu Beginn eines Taktes von jedem Prozessor sein vorangegangenes Ausgangssignal und das Ausgangssignal des anderen Prozessors aus Speichermitteln auslesbar ist und diese Signale miteinander vergleichbar sind, daß bei Überschreiten einer vorgebbaren Vergleichsabweichung Fehlerreaktionen des Systems auslösbar sind und daß andernfalls ein neuer Umsetzvorgang und ein Schreiben der neuen Ausgangssignale in die Speichermittel veranlaßbar ist. Für das erfindungsgemäße Verfahren wird diese Aufgabe dadurch gelöst, daß jeweils zu Beginn eines Taktes jeder Prozessor sein vorangegangenes Ausgangssignal und das Ausgangssignal des anderen Prozessors aus Speichermittel liest und diese Signale miteinander vergleicht, daß bei Überschreiten einer vorgebbaren Vergleichsabweichung Fehlerreaktionen des Systems ausgelöst werden und daß andernfalls ein neuer Umsetzvorgang und ein Schreiben der neuen Ausgangssignale in die Speichermittel veranlaßt wird.

Diese Abarbeitungsvorgänge besitzen den wesentlichen Vorteil, daß die Vergleichswerte nicht zwischengespeichert werden müssen, sondern direkt bearbeitet werden können. Damit arbeiten sowohl die sicheren Funktionen als auch der kreuzweise Datenvergleich mit den originären Daten. Es wird ohne Kopien gearbeitet und so werden weitere mögliche Fehler von vornherein ausgeschlossen.

Eine vorteilhafte Ausbildung der Erfindung ist dadurch gekennzeichnet, daß als Speichermittel ein Dualport-RAM vorgesehen ist. Derartige Bauelemente haben sich seit langem in der Technik bewährt.

Ein Ausführungsbeispiel der Erfindung ist in der Zeichnung dargestellt und wird im folgenden näher erläutert. Dabei zeigen:
FIG 1 ein Blockschaltbild und
FIG 2 ein Ablaufdiagramm.

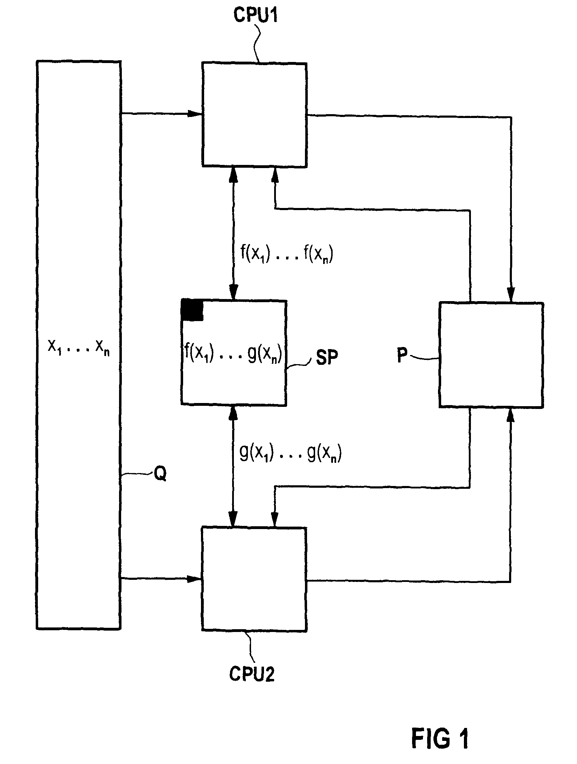

In der Darstellung gemäß FIG 1 ist dargestellt, wie von einer Quelle Q beispielsweise Wegmeßgrößen als Eingangssignale x₁ bis xₙ fortlaufend einem ersten taktgesteuerten Prozessor CPU1 bzw. einem zweiten taktgesteuerten Prozessor CPU2 zugeleitet werden. Bei den Eingangsgrößen kann es sich dabei jeweils um gleiche Weggrößen handeln, die jedoch nicht zwangsweise dem selben Wegmeßsystem entnommen werden müssen.

Die Eingangssignale x₁ bis xₙ werden im ersten Prozessor CPU1, z.B. Prozessor für Lageregelung, bzw. im zweiten Prozessor CPU2, z.B. im Numerikprozessor so umgesetzt, daß prinzipiell gleiche Ausgangsgrößen resultieren müßten. Der Umsetzvorgang kann dabei durch gleiche oder gleichwirkende Funktionen f(x) bzw. g(x) dargestellt werden. Abhängig von diesen Funktionen ergeben sich nun im Prozessor CPU1 Ausgangssignale f(x₁) bis f(xₙ), wobei das Fortschalten von einem Takt 1 bis zu einem Takt n durch einen der Übersichtlichkeit halber nicht dargestellten Taktgenerator vorgenommen wird. Gleiches gilt für den Prozessor CPU2, bei dem Ausgangssignale g(x₁) bis g(xₙ) taktweise nacheinander auftreten.

Die Ausgangssignale werden in einem Speicher SP, beispielsweise einem Dualport-RAM abgelegt. Ferner sind die Prozessoren CPU1 und CPU2 mit dem Prozeß P, der beispielsweise zum Steuern einer der Übersichtlichkeit halber nicht dargestellten Werkzeugmaschine oder eines Roboters dienen kann, verbunden.

Wesentlich für die Erfindung ist nun, wie innerhalb eines jeden Taktes der Zugriff auf die im Speicher SP abgelegten Ausgangssignale und das Generieren neuer Ausgangssignale erfolgt.

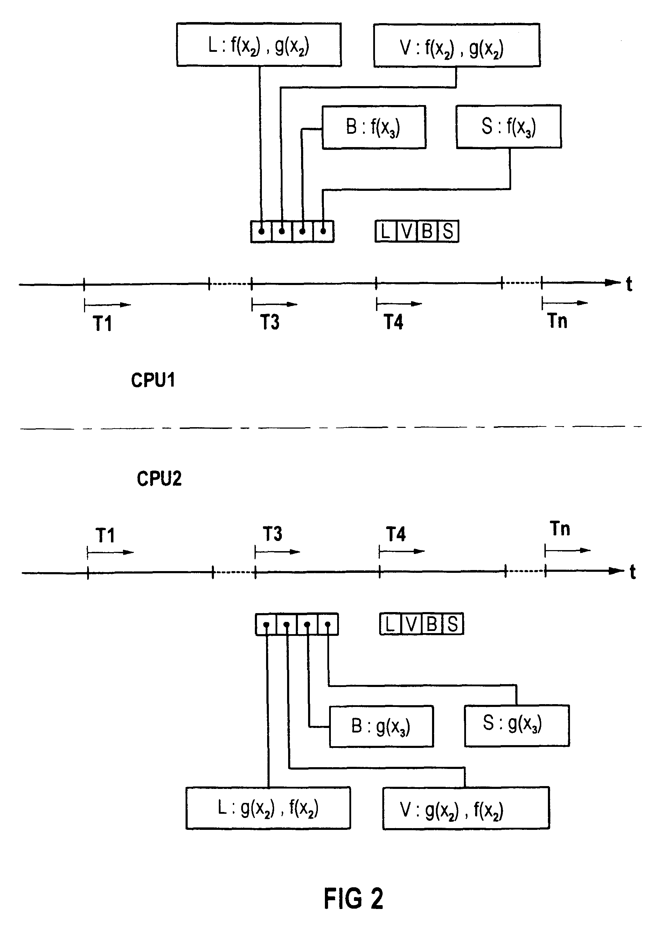

Dazu ist in der Darstellung gemäß FIG 2 ein Diagramm gezeigt, das im oberen Teil, d.h. oberhalb einer strichpunktierten Linie für den Prozessor CPU1 und im unterhalb liegenden Teil den Ablauf für den Prozessor CPU 2 verdeutlicht. Entlang einer Zeitachse mit der Bemaßung t ist jeweils angedeutet, daß ein taktweises Arbeiten erfolgt. Hervorgehoben sind dabei Takte T1 und Tn als erster und letzter Takt und dazwischen sind die Takte T3 und T4 angedeutet, auf die im folgenden eingegangen wird.

Im Takt T3 ist in einem zeitlich frühliegenden Fenster angedeutet, daß im Prozessor CPU1 ein Lesevorgang "L" ausgelöst wird. In diesem Lesevorgang "L" liest der Prozessor CPU1 die Ausgangssignale des vorangegangenen Taktes f(x₂) und g(x₂), während der Prozessor CPU2 zur gleichen Zeit einen Lesevorgang "L" für die Ausgangssignale g(x₂) und f(x₂) durchführt. In einem anschließenden Zeitfenster werden eben die eingelesenen Ausgangssignale miteinander verglichen. Dieser Vergleichsvorgang "V" wird in beiden Prozessoren CPU1 und CPU2 kreuzweise durchgeführt. Wird ein vorgebbarer Toleranzwert verletzt, so wird ein Fehler in einem Überwachungskanal des Prozessors CPU1 bzw. CPU2 festgestellt und eine sichere Reaktion ausgelöst.

Diese kann in verschiedenen Stop-Befehlen bestehen, die anwenderseitig programmierbar sind. Prinzipiell kann man sagen, daß der Toleranzwert abhängig vom Datum ist, das kreuzweise verglichen wird und dies kann wiederum ein Maschinendatum sein oder den Wert "0" oder "1" besitzen. Ist gleichzeitig eine Sicherheitsfunktion, beispielsweise sicherer Betriebshalt, sichere Geschwindigkeit, sichere Endlage oder sichere Nocken aktiv, so kann ein Stop aufgrund eines Defektes in einen Überwachungskanal beispielsweise in ein generatorisches Bremsen mit anschließender Impulssperre oder in eine sofortige Impulssperre übergeführt werden. Wird jedoch keine Sicherheitsfunktion aktiv überwacht, so kann es ausreichen, daß nur eine Meldung an den Bediener abgegeben wird.

Sofern der Vergleich auf einen ordnungsgemäßen Betrieb hinweist, kann in einem dritten unmittelbar anschließenden Zeitfenster Berechnen "B" ein Ausgangssignal neu generiert werden. Beim ersten Prozessor wäre dies ein Ausgangssignal f(x₃) für den Takt T3 und beim zweiten Prozessor CPU2 wäre dies ein Ausgangssignal für den Zustand Berechnen "B" als g(x₃). Das berechnete jeweilige Ausgangssignal f(x₃) bzw. g(x₃) kann dann in einem anschließenden weiteren Zeitfenster Schreiben "S" in den Speicher, SP eingeprägt werden.

Dieser taktweise wiederkehrende Vorgang Lesen "L", Vergleichen "V", Berechnen "B" und Schreiben "S" wird taktweise, vorzugsweise in jedem Takt, neu durchgeführt. Dies ist für den Takt T4 sowohl für den Prozessor CPU1 als auch für den Prozessor CPU2 im Schaubild dargestellt.

Die Erfindung kann prinzipiell auch für andere Maschinen mit Sicherheitsbedürfnis verwendet werden.

## Patentansprüche

1. Einrichtung zum sicheren Betrieb einer numerischen Steuerung für Werkzeugmaschinen oder Roboter mit zwei taktgesteuerten Prozessoren (CPU1,CPU2), durch die aus gleichen Eingangssignalen (x₁,..,xₙ) entsprechend vorgebbarer Umsetzbedingungen gleiche Ausgangssignale (f(x₁),...,f(xₙ) bzw. g(x₁),...,g(xₙ)) generierbar sind, **dadurch gekennzeichnet**, daß jeweils zu Beginn eines Taktes (T3) von jedem Prozessor (CPU1 bzw. CPU2) sein vorangegangenes Ausgangssignal (f(x₂)bzw. g(x₂))und das Ausgangssignal (g(x₂) bzw. f(x₂))des anderen Prozessors (CPU2 bzw. CPU1) aus Speichermitteln (SP) auslesbar ist und diese Signale (f(x₂),g(x₂)) miteinander vergleichbar sind, daß bei Überschreiten einer vorgebbaren Vergleichsabweichung Fehlerreaktionen des Systems auslösbar sind und daß andernfalls ein neuer Umsetzvorgang und ein Schreiben der neuen Ausgangssignale (f(x₃),g(x₃)) in die Speichermittel (SP) veranlaßbar ist.

2. Einrichtung nach Anspruch 1, **dadurch gekennzeichnet**, daß als Speichermittel ein Dualport-RAM (SP) vorgesehen ist.

3. Verfahren zum sicheren Betrieb einer numerischen Steuerung für Werkzeugmaschinen oder Roboter mit zwei taktgesteuerten Prozessoren (CPU1 CPU2), die aus gleichen Eingangssignalen (x₁,...,xₙ) entsprechend vorgebbarer Umsetzbedingungen gleiche Ausgangssignale (f(x₁),..., f(xₙ) bzw. g(x₁),...,g(xₙ)) generieren, **dadurch gekennzeichnet**, daß jeweils zu Beginn eines Taktes (T3) jeder Prozessor (CPU1 bzw. CPU2) sein vorangegangene Ausgangssignal (f(x₂) bzw. g(x₂)) und das Ausgangssignal (g(x₂) bzw. f(x₂))des anderen Prozessors (CPU2 bzw. CPU1) aus Speichermitteln (SP) liest und diese Signale (f(x₂), g(x₂)) miteinander vergleicht, daß bei Überschreiten einer vorgebbaren Vergleichsabweichung Fehlerreaktionen des Systems ausgelöst werden und daß andernfalls ein neuer Umsetzvorgang und ein Schreiben der neuen Ausgangssignale (f(x₃),g(x₃)) in die Speichermittel (SP) veranlaßt wird.

## Claims

1. Device for the safe operation of a numerical control for machine tools or robots having two clock-controlled processors (CPU1, CPU2) by means of which identical output signals (f(x₁),...,f(xₙ) and g(x₁),..., g(xₙ) respectively) can be generated from identical input signals (x₁,...,xₙ) in accordance with predeterminable conversion conditions, characterised in that in each case at the beginning of a clock-pulse cycle (T3) each processor (CPU1 and CPU2) can read its previous output signal (f(x₂) and g(x₂) respectively) and the output signal (g(x₂) and f(x₂) respectively) of the other processor (CPU2 and CPU1) out of storage means (SP) and these signals (f(x₂), g(x₂)) can be compared with each other, in that when a predeterminable comparison deviation is transgressed error reactions of the system can be triggered, and in that otherwise a new conversion process can be brought about and the new output signals (f(x₃), g(x₃)) written into the storage means (SP).

2. Device according to claim 1, characterised in that a dual port RAM (SP) is provided as the storage means.

3. Method for the safe operation of a numerical control for machine tools or robots having two clock-controlled processors (CPU1, CPU2) which generate identical output signals (f(x₁),...,f(xₙ) and g(x₁),..., g(xₙ) respectively) from identical input signals (x₁,...,xₙ) in accordance with predeterminable conversion conditions, characterised in that in each case at the beginning of a clock-pulse cycle (T3) each processor (CPU1 and CPU2) reads its previous output signal (f(x₂) and g(x₂) respectively) and the output signal (g(x₂) and f(x₂) respectively) of the other processor (CPU2 and CPU1) out of storage means (SP) and compares these signals (f(x₂), g(x₂)) with each other, in that when a predeterminable comparison deviation is transgressed error reactions of the system are triggered, and in that otherwise a new conversion process is brought about and the new output signals (f(x₃), g(x₃)) written into the storage means (SP).

## Revendications

1. Dispositif pour faire fonctionner de manière sûre une commande numérique pour des machines outil ou des robots, comportant deux processeurs (CPU1, CPU2) qui sont commandés par cycle et par lesquels il peut être généré, à partir de mêmes signaux (x₁, ..., xₙ) d'entrée, de mêmes signaux (f(x₁),..., f(xₙ)) de sortie en fonction de conditions de transformation pouvant être prescrites, caractérisé en ce que, chaque fois au début d'un cycle (T3), il peut être lu par chaque processeur (CPU1 et CPU2) son signal (f(x₂) et g(x₂)) de sortie précédent et le signal (g(x₂) et f(x₂)) de sortie de l'autre processeur (CPU2 et CPU1) dans des moyens (SP) de mémorisation et que ces signaux (f(x₂), g(x₂)) peuvent être comparés les uns aux autres, en ce que, en cas d'écart de comparaison supérieur à un écart de comparaison pouvant être prescrit, des réactions d'erreur du système peuvent être déclenchées et en ce que, dans le cas contraire, une nouvelle opération de conversion et une écriture de nouveaux signaux (f(x₃), g(x₃)) de sortie dans les moyens (SP) de mémorisation peut avoir lieu.

2. Dispositif suivant la revendication 1, caractérisé en ce qu'il est prévu comme moyen de mémorisation une RAM Dualport (SP).

3. Procédé pour faire fonctionner de manière sûre une commande numérique pour des machines outil ou des robots, comportant deux processeurs (CPU1, CPU2) qui sont commandés par cycle et qui génèrent à partir de mêmes signaux d'entrée, de mêmes signaux (f(x₁),..., f(xₙ)) et (g(x₁),..., g(xₙ)) de sortie en fonction de conditions de conversion qui peuvent être prescrites, caractérisé en ce que, chaque fois au début d'un cycle (T3), chaque processeur (CPU1 et CPU2) lit son signal (f(x₂) et g(x₂)) de sortie précédent et le signal (g(x₂) et f(x₂)) de sortie de l'autre processeur (CPU2 et CPU1) dans des moyens (SP) de mémorisation et que ces signaux (f(x₂), g(x₂)) sont comparés l'un à l'autre, en ce que, en cas d'écart de comparaison supérieur à un écart de comparaison pouvant être prescrit, des réactions d'erreur du système sont déclenchées et en ce que, dans le cas contraire, une nouvelle opération de conversion et une écriture des nouveaux signaux (f(x₃), g(x₃)) de sortie dans les moyens (SP) de mémorisation ont lieu.
